# EUROPÄISCHE PATENTANMELDUNG

(11) **EP 0 641 855 A1**
(43) Veröffentlichungstag der Anmeldung: **08.03.1995**
(21) Anmeldenummer: 94113442.1
(22) Anmeldetag: 29.08.1994
(51) Int. Cl.: C11D 3/395, D06L 3/08, C01B 11/10

(54) **Alkalisches Chloritbleichmittel**

(30) Priorität: 04.09.1993 DE 4329959
(71) Anmelder: HOECHST AKTIENGESELLSCHAFT, D-65929 Frankfurt am Main (DE)
(72) Erfinder: Gerstendorff, Udo, D-36341 Lauterbach (DE); Kleber, Rolf, Dr., D-63263 Neu-Isenburg (DE)

(57) **Zusammenfassung**

Die Erfindung bezieht sich auf ein alkalisches Chloritbleichmittel mit einem pH-Wert im Bereich von 7,5 bis 10, bevorzugt 7,5 bis 9 und einem Gewichtsverhältnis von Chlorit:Aldehyd von 1 bis 4:0,01 bis 0,5. Gegenstand der Erfindung ist ferner ein Verfahren zum Bleichen von Textilien, bei dem das Textilprodukt mit einer wäßrigen Flotte, enthaltend das erfindungsgemäße Chloritbleichmittel bei einer Temperatur von 20 - 80°C, bevorzugt 40 - 60°C, behandelt wird.

## Beschreibung

In der Textilindustrie wird hauptsächlich Natriumchlorit als Bleichmittel verwendet. Dieses entsteht beim Einleiten von Chlordioxid in Natronlauge und gleichzeitiger Reduktion, z. B. mit Wasserstoffperoxid. Natriumchlorit ist das Natriumsalz der chlorigen Säure, die man als das eigentlich bleichende Agens ansieht. Aus diesem Grund erfolgte die Textilbleiche lange Zeit mit einer sauren Flotte. In der Praxis aktivierte man entweder durch Ansäuern der Flotte mit Ameisensäure oder Essigsäure auf einen pH-Wert von 3,8 bis 4,5 oder mit besonderen Aktivatoren. Das Arbeiten mit Natriumchlorit in saurem pH-Bereich beinhaltet Nachteile, wie die Freisetzung von Chlordioxid. Die Entwicklung von Chlordioxid ist bei der Textilbleiche unerwünscht. Es gelingt nur schwer, die Apparaturen dicht zu halten, um Chlordioxidverluste und die damit verbundene Belästigung zu vermeiden. Außerdem verschärft jede Chlordioxidentwicklung auch das Korrosionsproblem, da korrosionshemmende Zusätze in der Flotte für die Gasphase nicht wirksam werden können. Des weiteren führt die Bildung von Chlordioxid zu einer Belastung der anfallenden Abwässer mit AOX-Verbindungen, die im Hinblick auf umweltverträgliche Verfahren vermieden werden sollen.

Im Unterschied zu der Bleiche mit Natriumchlorit im sauren pH-Bereich, beschreibt die Japanische Offenlegungsschrift Nr. 67472/76 ein Verfahren zum Bleichen von Stoffgewebe durch Einsatz von alkalischem Natriumchlorit bei hoher Temperatur in Gegenwart eines Aldehyden. Gemäß dem dort beschriebenen Verfahren erfolgt der Bleichvorgang in stark alkalischer Lösung bei einem pH-Wert zwischen 10 und 14. Ein Verhältnis von Natriumchlorit:Aldehyd:Natriumhydroxid von 4:3:4 hat sich am besten bewährt. Der Beschreibung ist eine Temperaturangabe für den Bleichvorgang von 90° C zu entnehmen. Nachteilig an diesem Verfahren ist ebenfalls die Bildung von unerwünschtem Chlordioxid. Ebenfalls nachteilig ist das Vergilben von nativen Fasern z. B. aus Baumwolle. Darüber hinaus erfolgt unter den beschriebenen Bedingungen ein Abbau des Durchschnittspolymerisationsgrades von nativen Fasern, z. B. Baumwolle.

Aufgabe der vorliegenden Erfindung ist es, ein alkalisches Chloritbleichmittel, enthaltend Aldehyd, zur Verfügung zu stellen, bei dessen Einsatz die vorstehend beschriebenen Nachteile nicht auftreten.

Überraschenderweise hat sich gezeigt, daß bei Einsatz eines alkalischen Chloritbleichmittels mit einem pH-Wert im Bereich von 7,5 bis 10, bevorzugt 7,5 bis 9 und einem Gewichtsverhältnis von Chlorit:Aldehyd von 1 bis 4:0,01 bis 0,5 bei Temperaturen von 20 bis 80° C, bevorzugt 40 bis 60° C, die aus dem Stand der Technik bekannten Nachteile nicht auftreten.

Gegenstand der vorliegenden Erfindung ist ein alkalisches Chloritbleichmittel, enthaltend Aldehyd, das dadurch gekennzeichnet ist, daß es einen pH-Wert von 7,5 bis 10, bevorzugt 7,5 bis 9, besitzt und ein Gewichtsverhältnis von Chlorit: Aldehyd von 1 bis 4:0,01 bis 0,5 aufweist.

Ebenfalls Gegenstand ist ein Verfahren zum Blechen von Textilien, das dadurch gekennzeichnet ist, daß das Textilprodukt mit einer wäßrigen Flotte, enthaltend das erfindungsgemäße Chloritbleichmittel bei einer Temperatur von 20 bis 80° C, bevorzugt 40 bis 60° C, behandelt wird.

Als Chloritbleichmittel werden Alkalimetallchlorite, bevorzugt Natriumchlorit und/oder Erdalkalimetallchlorite eingesetzt.
Die zu bleichenden Textilien können aus Naturfasern, Chemiefasern oder einem diesbezüglichen Mischgewebe bestehen. Die Naturfasern können sowohl tierischer Herkunft (Wolle, Seide) als auch pflanzlicher Herkunft (Baumwolle, Flachs) sein. Zu den wichtigsten Chemiefasern zählen Regeneratcellulose-Fasern, z. B. Viskose-Rayon, Kupfer-Rayon, Zellwolle sowie Synthesefasern, z.B. Polyamidfasern, Polyesterfasern, Polyacrylnitrilfasern und Polyurethanfasern. Die Vorgenannten Textilfasern werden als Stück im breiten Zustand oder in Strangform auf übliche Bleichapparaturen des alkalischen Bleichens, wie Packapparate, Jigger und Haspelkufe diskontinuierlich oder auf kontinuierlichen Vorbehandlungsstraßen, z.B. Colorado, Star-Trans, gebleicht.

An Aldehyden werden ein- und/oder mehrwertige Aldehyde, bevorzugt zweiwertige Aldehyde, eingesetzt. Besonders geeignet sind Formaldehyd, Acetaldehyd, Crotonaldehyd und Glyoxal. Des weiteren können auch polymere Aldehyde wie Paraformaldehyd, Trioxan, Paraldehyd sowie Aldehyddonatoren, wie Natriumformaldehydbisulfit, eingesetzt werden.

Das erfindungsgemäße Chloritbleichmittel weist ein Gewichtsverhältnis von Chlorit:Aldehyd von 1 bis 4:0,01 bis 0,5 auf. Der pH-Wert wird durch Zugabe geeigneter Basen, insbesondere Alkalimetallhydroxide, z. B. NaOH, KOH sowie Alkalicarbonate und Alkalihydrogencarbonate, z. B. NaHCO₃, KHCO₃ auf einen pH-Wert von 7,5 bis 10 eingestellt.

Die zu bleichenden Textilien werden mit einer wäßrigen Flotte, enthaltend das erfindungsgemäße Chloritbleichmittel, behandelt. Die wäßrige Flotte kann gegebenenfalls weitere, bei Chloritbleichen verwendeten Substanzen, wie oberflächenaktive Mittel und Puffersubstanzen, enthalten. Das Behandeln der Textilien erfolgt vorzugsweise durch Imprägnierung mit der wäßrigen Flotte im Verhältnis 1:3 bis 1:40, vorzugsweise 1:5 bis 1:20 bei einer Temperatur von 20 bis 80° C, vorzugsweise 40 bis 60° C. Falls erforderlich, können die zu bleichenden Textilien vor dem Bleichvorgang vorbehandelt werden. Der Zeitraum der Behandlung liegt üblicherweise bei 2 Minuten bis 24 Stunden, wobei bei längeren Behandlungszeiten das Textilgut, gegen den Verlust von Wasser und Chemikalien geschützt, in einem Beute, z. B. aus Polyethylen, eingepackt wird. Im Anschluß an den Bleichvorgang wird die behandelte Textilie üblicherweise mit Wasser gewaschen und bei 60 bis 90 °C getrocknet. Die derart gebleichte Ware weist zudem einwandfreie fasertechnologische Eigenschaften auf.

Das erfindungsgemäße Chloritbleichmittel läßt sich auch zum Bleichen von gefärbten Textilien, z. B. mit Indigo gefärbten Baumwollartikeln wie Jeans, einsetzen. Darüber hinaus eignet sich das Chloritbleichmittel auch zum Entfärben gefärbter Abwässer aus Textilfärbereien.

### Anwendungsbeispiele

### A) Bleichen von ungefärbtem Gewebe

### Beispiel 1

Aus 2,0 g Natriumchlorit, 0,5 g Formaldehyd, Natriumhydrogencarbonat und ad 100 g Wasser wird ein Bleichbad mit einem pH-Wert von 8,0 hergestellt. Mit diesem Bleichbad, dem keine weiteren Zusätze zugegeben werden, wird eine Maschenware aus Baumwolle (125 g/m²) mit einer Naßauflage von 100 % (Flottenverhältnis 1:10) behandelt. Die Ware wird bei 60° C geklotzt und anschließend im geschlossenen Polyethylenbeutel bei 60° C gehalten. Nach Spülen mit kaltem Wasser und Trocknen bei 90° C wird eine gebleichte Ware mit den in Tabelle 1 genannten technologischen Werten erhalten.

### Beispiel 2

Aus 2,0 g Natriumchlorit, 0,7 g Trioxan, Kaliumhydrogencarbonat und ad 100 g Wasser wird ein Bleichbad mit einem pH-Wert von 7,7 hergestellt. Mit diesem Bleichbad, dem keine weiteren Zusätze zugegeben werden, wird eine Maschenware aus Baumwolle (125 g/m²) mit einer Naßauflage von 100 % (Flottenverhältnis 1:10) behandelt. Die Ware wird bei 40° C geklotzt und anschließend 3 Minuten bei 105° C gedämpft. Nach Spülen mit kaltem Wasser und Trocknen bei 90° C wird eine gebleichte Ware mit den in Tabelle 1 genannten technologischen Werten erhalten.

**Tabelle 1**

| Technologische Werte | | | |
|---|---|---|---|
| Beispiel | Weißgrad | Schädigungsfaktor | Saughöhe [cm] |
| 1 | 86 | 0,15 | 11 |
| 2 | 87 | 0,13 | 12 |
| Rohware | 80 | 0,00 | 1 |
| Weißgrad: % Remission (Filter-Photometer) bei 460 nm Schädigungsfaktor: Verhältnis des Durchschnittspolymerisationsgrades (DP) vor der Bleiche zum Durchschnittspolymerisationsgrad (DP) nach der Bleiche Saughöhe: bestimmt gemäß DIN 53924 | | | |

### Beispiel 3

In einem Behälter, ausgelegt als Unterflotten-Behandlungsapparat, wird ein Bleichbad aus 3 g/l Natriumchlorit (50 %ig) und 5 g/l Natriumhydrogencarbonat mit einem pH-Wert von 8,6 auf 60° C erwärmt.
Mit einer weiteren Lösung, die 5 g/l eines handelsüblichen Netzmittels, 5 g/l Natriumhydrogencarbonat und 10 ml/l Formaldehydlösung (37 %ig) und einen pH-Wert von ca. 8 aufweist, wird ein Baumwoll-Trikot getränkt und anschließend zwischen zwei Gummiwalzen auf eine Restfeuchte von 130 % abgequetscht. Die derart vorbehandelte Ware wird in das Bleichbad eingelegt und bei gleichbleibender Temperatur von 60° C behandelt. Das Flottenverhältnis beträgt 1:10. Während der Verweilzeit von 30 Minuten sinkt der pH-Wert nicht unter 8,4. Nach beendeter Behandlung wird die Ware entnommen, heiß gewaschen, gespült und getrocknet.
Der Weißgrad beträgt nach dieser Behandlung 81 % (R 46) gegenüber 54 % (R 46) der Ausgangsware. [R 46 = % Remission (Filter-Photometer) bei 460 nm]. Der Griff der Ware ist angenehm weich.

### B) Blechen von gefärbtem Gewebe

### Beispiel 4

Aus 2,0 g Natriumchlorit, 1,0 g Paracetaldehyd, 2,0 g Fettalkohol (5 mol EO), Natriumhydroxid und ad 100 g Wasser wird ein Bleichmittel mit einem pH-Wert von 8,0 hergestellt. In einer Trommelwaschmaschine werden entschlichtete indigogefärbte Jeanshosen im Flottenverhältnis 1:20 bei 50° C während 20 Minuten gewaschen. Anschließend wird noch vorhandenes Natriumchlorit durch Zusatz von Natriumdithionit zerstört. Nach Spülen mit Wasser wird die Ware bei 100° C getrocknet. Die Jeans sind gleichmäßig hellblau.

### C) Entfärben von Textilabwasser

### Beispiel 5

Textilabwasser, enthaltend die Reaktivfarbstoffe Reactive Red 181 und Reactive Red 180 (Azofarbstoffe) mit einem pH-Wert von 7,8, wird wie folgt behandelt:
1 l Textilabwasser wird mit 1 g Natriumchlorit und 0,2 g
Natriumformaldehydbisulfit während 10 Minuten auf 40° C erwärmt. Das so behandelte Abwasser ist farblos.

Die in den Beispielen 1 bis 5 anfallenden Flotten weisen keinen Gehalt an AOX-Verbindungen auf. Während der Bleichvorgänge entsteht kein Chlordioxid.

## Patentansprüche

1. Alkalisches Chloritbleichmittel, enthaltend Aldehyd, dadurch gekennzeichnet, daß das Chloritbleichmittel einen pH-Wert von 7,5 bis 10, bevorzugt 7,5 bis 9, besitzt und ein Gewichtsverhältnis von Chlorit:Aldehyd von 1 bis 4:0,01 bis 0,5 aufweist.

2. Chloritbleichmittel nach Anspruch 1, dadurch gekennzeichnet, daß als Chlorit Alkali-, bevorzugt Natriumchlorit und/oder Erdalkalichlorite, eingesetzt werden.

3. Chloritbleichmittel nach Anspruch 1 oder 2, dadurch gekennzeichnet, daß es einwertige, mehrwertige, bevorzugt zweiwertige Aldehyde oder ein Gemisch aus ein- und mehrwertigen Aldehyden enthält.

4. Chloritbleichmittel nach einem der Ansprüche 1 bis 3, dadurch gekennzeichnet, daß der alkalische pH-Wert durch Zugabe von Basen, bevorzugt Alkalimetallhydroxiden, Alkalimetallcarbonaten und/oder Alkalimetallhydrogencarbonaten eingestellt wird.

5. Verfahren zum Bleichen von Textilien, dadurch gekennzeichnet, daß das Textilprodukt mit einer wäßrigen Flotte, enthaltend das Chloritbleichmittel nach Anspruch 1, bei einer Temperatur von 20 bis 80° C, bevorzugt 40 bis 60° C, behandelt wird.

6. Verfahren nach Anspruch 5, dadurch gekennzeichnet, daß als Textilien Textilprodukte aus Naturfasern und/oder Chemiefasern eingesetzt werden.

7. Verfahren nach Anspruch 5 oder 6, dadurch gekennzeichnet, daß das Textilprodukt mit der wäßrigen Flotte im Verhältnis von 1:3 bis 40, bevorzugt 1:5 bis 20, behandelt wird.

8. Verfahren nach einem der Ansprüche 5 bis 7, dadurch gekennzeichnet, daß die wäßrige Flotte weitere bei der Chloritbleiche verwendete Substanzen enthält.

9. Verfahren nach einem der Ansprüche 5 bis 8, dadurch gekennzeichnet, daß die Behandlung in einem Bleichapparat erfolgt.

10. Verfahren nach einem der Ansprüche 5 bis 9, dadurch gekennzeichnet, daß das gebleichte Textilprodukt nach der Bleichbehandlung gewaschen und getrocknet wird.

11. Verwendung des Chloritbleichmittels nach Anspruch 1 zum Entfärben von gefärbtem Textilabwasser.
